# EUROPEAN PATENT SPECIFICATION

(11) **EP 3 505 374 B1**
(45) Date of publication and mention of the grant of the patent: **13.04.2022**
(21) Application number: 18215917.8
(22) Date of filing: 30.12.2018
(51) Int. Cl.: B60G 7/00, B60G 13/00

(54) **DEVICE AND METHOD FOR ATTACHING A CYLINDER TO A CHASSIS OF A VEHICLE**
VORRICHTUNG UND VERFAHREN ZUM BEFESTIGEN EINES ZYLINDERS AN EINEM RAHMEN EINES FAHRZEUGS
DISPOSITIF ET PROCÉDÉ POUR ATTACHER UN CYLINDRE À UN CHASSIS DE VÉHICULE

(30) Priority: 30.12.2017 NL 2020219
(43) Date of publication of application: 03.07.2019
(73) Proprietor: Koninklijke Nooteboom Group B.V., 6603 BV Wijchen (NL)
(72) Inventor: VAN DE VONDEVOORT, Vincentius Hendricus Antony, 47559 KRANENBURG (DE)
(74) Representative: Bartelds, Erik

(56) References cited:
- DE-A1- 2 264 236
- DE-A1-102016 203 577
- DE-U- 1 857 359
- FR-A- 1 476 519
- FR-A1- 2 772 307
- NL-A- 7 708 970

## Description

The invention relates to a device for attaching to a chassis of a vehicle a cylinder comprising a ball of a ball joint, comprising a support element which can be mounted on the chassis and a ball joint housing, which comprises a ball socket of the ball joint against which the ball can lie, wherein the ball joint housing is attached releasably to the support element. Such a device is known e.g. from DE 18 57 359 U.

Devices are known, for instance in commercially available vehicles, in which the ball joint housing is pressed into the support element so as to be connected fixedly thereto. In such vehicles, such as trailers and semi-trailers, the cylinder is connected to and supports a wheel axle. The cylinder is for instance used as suspension, damping and/or for adjusting the wheel axle in the height relative to the chassis. The cylinder therefore often protrudes substantially vertically upward with the ball of the ball joint. In order to give the cylinder enough space for movement relative to the ball joint housing they are not attached to each other, but the ball joint housing is merely placed on the cylinder. The ball joint housing is pressed against the cylinder by the weight of the chassis and the rest of the vehicle. The cylinder may hereby come loose unintentionally when it is relieved of pressure.

Ball joint housings in vehicles which carry great loads, such as trailers or semi-trailers for heavy transport, wear relatively quickly due to the great forces they are subjected to. The ball joint housings therefore require relatively frequent maintenance. The ball joint housings are difficult to access because they are situated close to the underside of the vehicle. The servicing of ball joint housings is therefore very time-consuming, and sometimes requires specialized tools in order to for instance lift the vehicle.

The above-identified prior art document DE 18 57 359 U discloses a suspension for steered wheels comprising a forked strut and a McPherson strut. The upper end of the McPherson strut is mounted in a rubber bearing or formed as a ball joint. A sleeve is connected to a rubber ring and to an inner sleeve by vulcanizing, and the ball joint is screwed into the inner sleeve.

Prior art document DE 2 264 236 A1 discloses a ball joint in whcih a ball having an elastomeric layer is arranged in a housing. The joint may be used to suspend a shock absorber on a vehicle. The elastomeric layer is fixed tot he ball by vulcanizing, and a metal sleeve or ring is arranged over only part of the outside of the elastomeric layer. The sleeve or ring in turn is fixed to the elastomeric layer by vulcanizing.

Prior art document DE 10 2016 203 577 A1 discloses a commercial vehicle, in particular a heavy duty vehicle, with a plurality of wheel assemblies attached to a vehicle frame. At least one of the wheel assemblies has an elongated wheel carrier including at each of the longitudinal ends of the wheel carrier a wheel, a drive unit for driving the wheels and a gear device. The at least one wheel assembly further comprises a clutch device, which either interrupts or establishes a power transmission connection between the drive unit and the wheels, and a braking device approved for the operation of the commercial vehicle in public road traffic up to speeds of more than 25 km/h.

And finally, prior art document FR 2 772 307 A discloses an oscillation damper or a suspension strut for the articulated mounting between a body and a wheel guide part of a motor vehicle by means of a quick coupling. For this purpose, the oscillation damper or the suspension leg forms an assembly or mounting unit with an elastic joint and a connecting piece. The quick coupling is made without engagement and rigidly between the connecting piece and the body or the wheel guide piece, so that even for high support forces, relative movement between the connecting piece and the body or the wheel guide piece is avoided.

The invention therefore has for its object to facilitate and/or expedite the servicing of ball joint housings on vehicles.

This object is achieved according to the invention by a device of the type stated in the preamble, wherein the ball joint housing is attached releasably to the support element by means of a first bayonet connection.

Because the ball joint housing is attached releasably to the support element, it is possible to remove the ball joint housing from the vehicle on its own for maintenance. Not all the maintenance need thereby take place while the ball joint housing is attached to the vehicle. A location which is easy to access, such as for instance a workbench, can then be chosen for some of the maintenance. Alternatively, the ball joint housing can simply be replaced with a new one, or one which has already been serviced. And with the bayonet connection an optionally temporary connection between the ball joint housing and the support element can be made easily and/or without tools. During for instance the connecting of the ball joint housing to the support element a mechanic is able to use both hands to connect the ball joint housing via the bayonet connection, whereby a temporary connection is provided. The mechanic can then, optionally once again with both hands, bring about a more permanent connection using tools, for instance by means of bolts and/or nuts, without the ball joint housing having to be held. This facilitates the initial installation of the ball joint housing on the chassis of the vehicle.

In another embodiment of the device according to the invention the first bayonet connection comprises a first slot in the support element and a first protrusion on the ball joint housing, which first protrusion is received movably in the slot.

Because it is precisely the protrusion and not the slot which is arranged in the ball joint housing, the ball joint housing can take a relatively strong form. The movability of the protrusion in the slot can alternatively or additionally provide for the releasable connection, and thereby provide the above described advantage.

In yet another embodiment of the device according to the invention the support element has a first through hole, through which is inserted a first fixing element, which is connected to the ball joint housing.

Because the ball joint housing can be connected to the support element with a fixing element, for instance a bolt, a strong yet releasable connection can be provided. The connection by means of the fixing element can prevent the bayonet connection coming loose unintentionally during use.

A first engaging hole for the fixing element is optionally arranged in the ball joint housing.

In yet another embodiment of the device according to the invention the support element has a contact surface against which the ball joint housing lies, wherein the contact surface and the ball joint housing are provided with respective first and second mutually co-acting locking means for the purpose of locking the ball joint housing against displacement relative to the support element in a plane parallel to the contact surface.

Such locking means provide the advantage that the ball joint housing is already locked against movements in a plane, whereby a temporary connection, for instance by a bayonet connection, need not prevent movement in directions in that plane. The temporary connection can thereby take a simpler form.

In a practical embodiment the contact surface is in use an upper side of the support element, whereby the ball joint housing can effectively transmit a great vertical force from the wheel axle to the chassis.

In yet another embodiment of the device according to the invention the support element comprises at least two side walls lying opposite each other and extending at a right angle to the contact surface, wherein the first slot is arranged in one of the two side walls and the through hole in the other of the two side walls.

Because the hole is arranged on a different side wall than the bayonet connection, they can together provide an effective connection of the ball joint housing to the support element.

According to another embodiment of the invention, a device is provided wherein a damping layer, such as a rubber layer, against which the ball can lie is provided in the ball socket.

The damping layer ensures that vibrations of the wheel axle, particularly vibrations with a high frequency and/or a small amplitude, are transmitted to the chassis to lesser extent. This prevents, among other things, wear to the chassis, and improves the driving comfort of the vehicle.

The invention also relates to an assembly comprising a device according to the invention and a cylinder comprising a ball of a ball joint, wherein the cylinder and the support element are provided with mutually co-acting holding means whereby the cylinder can be held with its ball movably in the ball socket.

When the cylinder has a lot of freedom of movement relative to the support element, a space can result between for instance the cylinder and the ball joint housing. When dirt such as dust or grit enters this space, the ball and/or the ball socket can wear more quickly. By holding the cylinder with its ball movably in the ball socket no or less space is created between the ball and the ball socket, whereby no or less dirt is able to find its way therebetween. This embodiment thereby provides the advantage that the ball and/or the ball socket wears less quickly.

When a vehicle such as a trailer or semi-trailer is used in unloaded state, for instance on the way to a load, one or more wheels are often retracted so that they come off the road surface. This retracting is also referred to as lifting. The advantage of the lifting is that the resistance of the vehicle decreases and the tyres wear less. The lifting takes place by retracting the cylinder, after which the wheel support arm remains in upward position due to the hydraulic pressure pressing the cylinder upward. The whole arm is thus suspended from the cylinder. After this, the cylinder is uncoupled from the height adjuster, whereby the cylinder could in principle move relative to the ball socket, and could come away therefrom. This embodiment can provide the advantage that when a wheel is lifted, i.e. is retracted, the cylinder will be able to move relative to the ball socket to some extent, but will not come away therefrom. The wheel can thereby be put back down immediately after the lifting without the cylinder having to be placed back in the ball socket. Lifting the wheel and lowering it again is thereby facilitated and/or expedited.

In an embodiment of the assembly according to the invention the mutually co-acting holding means comprise a second bayonet connection.

The cylinder is generally relatively heavy. The second bayonet connection can provide an easily formed temporary connection between the support element and the cylinder. When installing the cylinder, a mechanic can thereby first bring about the temporary connection by means of the second bayonet connection. After this, the mechanic can bring about a more permanent connection, for instance with bolts and/or nuts, without having to hold or support the cylinder. The mechanic will thereby have to lift the heavy cylinder for a shorter time.

In another embodiment of the assembly according to the invention the second bayonet connection comprises a second slot and a second protrusion, wherein in a connected state of the second bayonet connection the second protrusion has a cross-sectional dimension which is smaller than an at least local cross-sectional dimension of the second slot, whereby the second protrusion is movable in the second slot.

Because the second protrusion is movable in the second slot, the cylinder can move relative to the support element for the purpose of providing an effective suspension and/or damping of the vehicle, and/or for the purpose of adjusting the chassis in the height.

In yet another embodiment of the assembly according to the invention the second bayonet connection comprises the or a second slot in the support element and the or a second protrusion on the cylinder and/or the ball thereof.

Because it is precisely the protrusion and not the slot which is arranged in the cylinder, the system can take a relatively strong form.

In yet another embodiment of the assembly according to the invention the holding means comprise a second through hole in the support element, through which a second fixing element which can be connected to the cylinder and/or ball is inserted in order to connect the cylinder and/or the ball movably to the support element.

Because the cylinder can be connected with a fixing element, for instance a bolt, to the support element, a strong yet releasable connection can be provided. The connection by means of the second fixing element can prevent the bayonet connection coming loose unintentionally during use.

A second engaging hole for the fixing element is optionally arranged in the cylinder and/or the ball thereof.

In yet another embodiment of the assembly according to the invention the second through hole in the support element has a cross-sectional dimension which is greater than an at least local cross-sectional dimension of the second fixing element, whereby the second fixing element is movable in the second hole.

Because the second fixing element is movable in the second hole, the cylinder can move relative to the support element for the purpose of providing an effective suspension and/or damping of the vehicle, and/or for the purpose of adjusting the chassis in the height.

In yet another embodiment of the assembly according to the invention the second slot is arranged in one of the side walls and the second hole in the other of the side walls.

In such an embodiment the first and the second slot are arranged in the same side wall. The first and second bayonet connection can hereby take substantially the same form, and can thus be connected and released in the same rotation direction. This prevents that connecting and/or releasing of the one bayonet connection causes respectively releasing and connecting of the other bayonet connection. Because the first hole and the second hole are arranged in the same side wall, the mechanic is alternatively or additionally able to release the cylinder and the ball joint housing from the support element from one side of the support element only.

The invention also relates to a vehicle comprising a chassis and a wheel axle and the assembly according to the invention, wherein the wheel axle is connected to the cylinder, which is held with its ball in the ball socket of the device, and wherein the device is attached to the chassis.

The thus formed vehicle can have all the above stated features in any random suitable combination, and can have all the associated advantages.

The invention further relates to a method for attaching to a chassis of a vehicle a cylinder comprising a ball of a ball joint, comprising the steps of mounting a support element on the chassis, releasably attaching to the support element a ball joint housing having a ball socket, and attaching the cylinder releasably to the chassis, such that the ball of the ball joint rests in the ball socket, the ball joint housing is are attached releasably to the support element by means of a bayonet connection..

In a variant of this method the cylinder is attached to the chassis by attaching it releasably to the support element by means of a bayonet connection. It is thus possible to suffice with a single part to attach both the ball joint housing and the cylinder to the chassis.

The invention is further elucidated with reference to the following figures, wherein:
Figure 1 is a schematic side view of a chassis of a vehicle and a wheel suspended therefrom;
Figure 2 is a perspective view with exploded parts of an embodiment of the invention;
Figures 3A-3D are perspective views of different steps of the connecting of a joint to a support element according to the invention; and
Figures 4A-4D are perspective views of different steps of the connecting of a cylinder to the joint and the support element of figures 3A-3D.

The same elements are designated in the figures with the same reference numerals, and corresponding elements of different embodiments are designated with the same reference numerals increased by 100.

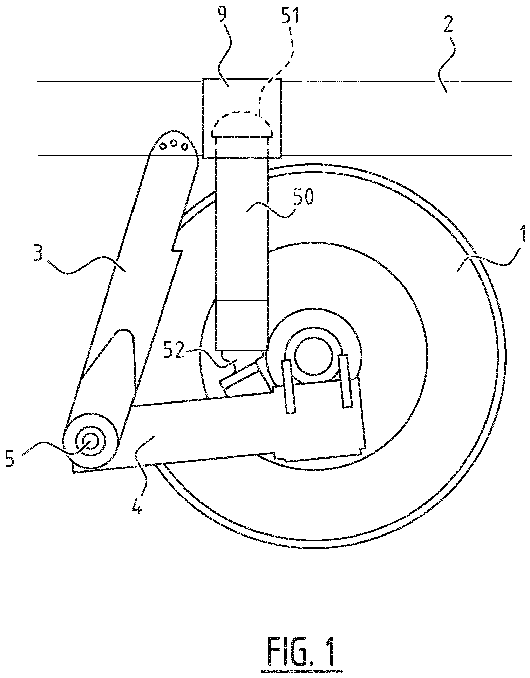

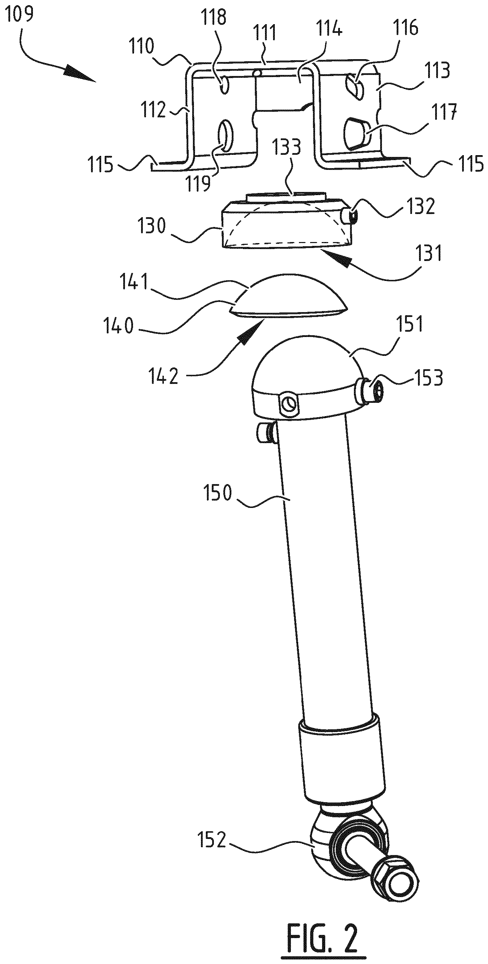

Figure 1 shows a wheel 1 which is connected to a beam 2 of a chassis of a vehicle. Mounted on beam 2 is a first arm 3, to which a second arm 4 is pivotally connected with a first end by hinge 5. Wheel 1 is bearing-mounted on the second end of second arm 4. Second arm 4 is connected to beam 2 via a piston rod 52 and cylinder 50, these together forming a piston/cylinder combination, bearing-mounted thereon. Cylinder 50 has on its upper side a ball 51 of a ball joint, whereby the cylinder is connected to beam 2 by means of a device 9 (see figures 2-4D). Because piston 52 can slide into and out of cylinder 50, and can thereby pivot second arm 4 relative to first arm 3, wheel 1 can move up and downward relative to beam 2 of the chassis. The freedom of movement of wheel 1 relative to beam 2 can for instance be used for suspension and/or damping. Cylinder 50 can alternatively or additionally be used to adjust the height of beam 2 above a road surface by moving wheel 1 up or downward by having piston 52 slide inward or outward relative to cylinder 50.

An embodiment of the device 9 of figure 1 is shown in exploded view in figure 2 as device 109. The device comprises a support element 110 which can be mounted on a beam 2 (not shown in figure 2) of a chassis. The device further comprises a ball joint housing 130. Support element 110 has an upper surface 111 which forms a contact surface for ball joint housing 130. Positioned at a right angle to the upper body are two side walls 112, 113 and real wall 114. Two wings 115 extend from the free end of each of the side walls 112, 113. In front view the support element 110 thereby substantially has the shape of an Ω sign (omega sign). Arranged in one of the side walls 113 is a first slot 116 and a second slot 117. Arranged in the opposite side wall 112 is a first through hole 118 and a second through hole 119.

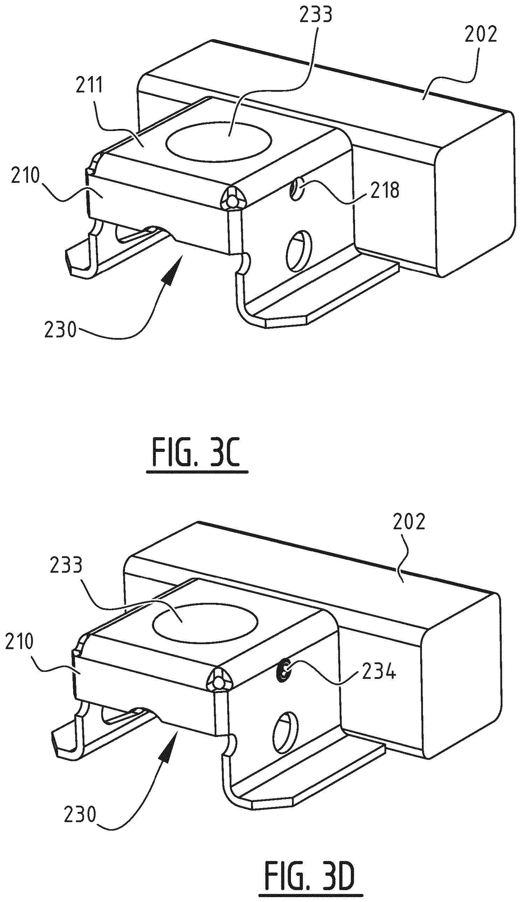

Ball joint housing 130 has a ball socket 131 and a first protrusion 132. Ball joint housing 130 can be connected to support element 110 by placing first protrusion 132 in first slot 116 of support element 110 and rotating ball joint housing 130 relative to support element 110. First protrusion 132 and first slot 116 together form a bayonet connection. Ball joint housing 130 also has a first engaging hole (see figure 3C) for a first fixing element, such as a bolt. When ball joint housing 130 is connected to support element 110 by means of the bayonet connection, the first engaging hole lies in line with first hole 118 of support element 110 so that a first fixing element can engage through first hole 118 on the first engaging hole, and can thereby fixate ball joint housing 130 relative to support element 110. Ball joint housing 130 further has second locking means 133, here in the form of a locally raised upper side, which are further elucidated below.

A damping layer 140 consisting of a substantially socket-like rubber element is in this case provided. An outer surface 141 of damping layer 140 substantially corresponds in shape with ball socket 131, and can lie thereagainst. Damping layer 140 also has an inner surface 142 which is substantially socket-like, so that a ball 151 of a cylinder 150 can be placed against the inner surface 142 of damping layer 140 in ball socket 131. Ball 151 and ball socket 131 with damping layer 140 together form a ball joint.

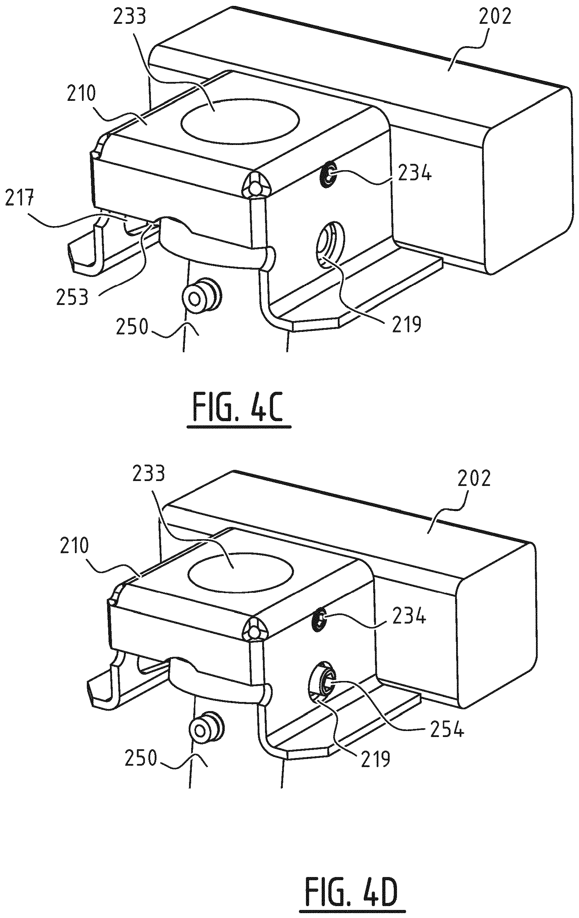

Cylinder 150 is provided on its ball 151 with a second protrusion 153. The second protrusion 153 forms together with second slot 117 of support element 110 a second bayonet connection. Second slot 117 of support element 110 has a cross-sectional dimension which is greater than an at least local cross-sectional dimension of the second protrusion 153, so that second protrusion 153, when inserted into second slot 117, is movable in second slot 117. Cylinder 150 is also provided on its ball 151 with a second engaging hole (see figure 4C) which, when the cylinder is connected by means of the second bayonet connection to support element 110, lies in line with second hole 119. A second fixing element can thereby engage through second hole 119 on the second engaging hole and connect cylinder 150 to support element 110. Second hole 119 has a cross-sectional dimension which is greater than an at least local cross-sectional dimension of the second fixing element, so that the second fixing element can move in second hole 119. In the connected situation thereof, cylinder 150 is thereby movable relative to support element 110.

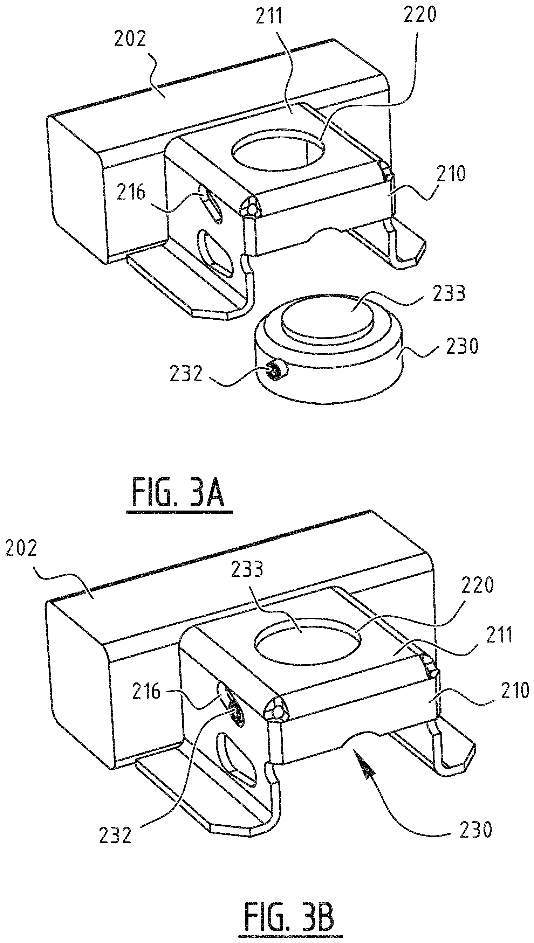

Figures 3A-3C show how a ball joint housing 230 can be connected to a support element 210 in a first step. In figure 3A support element 210 has already been mounted on beam 202 (see figure 3A). Ball joint housing 230 can then be connected by first placing first protrusion 232 of the ball joint housing in first slot 216 of support element 210 (see figure 3B). Ball joint housing 230 can then be rotated relative to support element 210, whereby first protrusion 232 moves in first slot 216. The bayonet connection formed by first protrusion 232 and first slot 216 together will thereby be closed. Ball joint housing 230 thereby also comes to lie against the upper surface 211 of the support element. The second locking means 233 of the ball joint housing here come to lie in an opening 220 in upper surface 211, which forms first locking means co-acting with second locking means 233. Ball joint housing 230 is thereby locked relative to support element 210 against displacement in directions in upper surface 211 (see figure 3C), while a rotation movement as necessary for the bayonet connection remains possible owing to the round form of both opening 220 and raised part 233. During connecting of the bayonet connection a first engaging hole in ball joint housing 230 comes to lie in line with the first through hole 218. A first fixing element 234 can thereby engage through through hole 218 on ball joint housing 230 in order to connect it firmly and also releasably to support element 210 (see figure 3D).

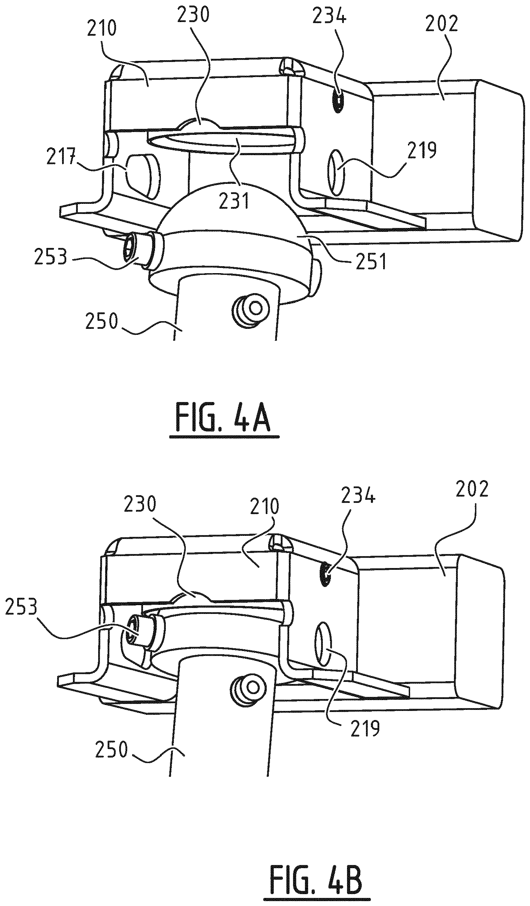

Figures 4A-4C show how a cylinder 250 can be connected to support element 210 in a second step. Support element 210 has already been mounted on a beam 202, and ball joint housing 230 is placed, and connected to first fixing element 234, in support element 210 (see figure 4A). A damping layer, for instance of rubber, is optionally arranged in a ball socket 231 of ball joint housing 230. Cylinder 250 can be placed with a ball 251 thereof against ball socket 231 by placing a second protrusion 253 of cylinder 250 in a second slot 217 (see figure 4B). Second protrusion 253 and second slot 217 together form a second bayonet connection which can be closed by rotating cylinder 250 relative to support element 210 and ball joint housing 230 (see figure 4C). A second engaging hole in the cylinder thereby comes to lie in line with a second through hole 219 in support element 210. A second fixing element 254 can thereby engage through second through hole 219 on cylinder 250 in order to connect it movably to support element 210. The cross-sectional dimensions of second slot 217 and second through hole 219 are greater than at least a local cross-section of respectively the second protrusion 253 and the second fixing element 254. This results in a clearance between the second slot 217 and the second through hole 219 and respectively the second protrusion 253 and the second fixing element 254. Owing to this clearance cylinder 250 can move relative to ball joint housing 230 and support element 210. This is important for compensating for variations in the position of the cylinder as a result of the lower wheel support arm 4 being urged up or downward.

The invention is not limited to the shown and/or stated embodiments, but can be varied in many ways.

However, the scope of the invention is defined by the appended claims.

## Claims

1. Device (9; 109; 209) for attaching to a chassis of a vehicle a cylinder (50; 150; 250) comprising a ball (51; 151; 251) of a ball joint, comprising:
- a support element (110; 210) which can be mounted on the chassis; and
- a ball joint housing (130; 230), which comprises a ball socket (131; 231) of the ball joint against which the ball (51; 151; 251) can lie, wherein the ball joint housing (130; 230) is attached releasably to the support element (110; 210),
**characterized in that** the ball joint housing (130; 230) is attached releasably to the support element (110; 210) by means of a first bayonet connection.

2. Device (9; 109; 209) as claimed in claim 1, wherein the first bayonet connection comprises a first slot (116; 216) in the support element (110; 210) and a first protrusion (132; 232) on the ball joint housing (130; 230), which first protrusion (132; 232) is received movably in the first slot (116; 216).

3. Device (9; 109; 209) as claimed in claim 1 or 2, wherein:
the support element (110; 210) has a first through hole (118; 218), through which is inserted a first fixing element (234), which is connected to the ball joint housing (130; 230).

4. Device (9; 109; 209) as claimed in any one of the foregoing claims, wherein the support element (110; 210) has a contact surface (111; 211) against which the ball joint housing (130; 230) lies, wherein the contact surface (111; 211) and the ball joint housing (130; 230) are provided with respective first and second mutually co-acting locking means (133; 220, 233) for the purpose of locking the ball joint housing (130; 230) against displacement relative to the support element (110; 210) in a plane parallel to the contact surface (111; 211).

5. Device (9; 109; 209) as claimed in claim 3 or 4 when dependent on claim 2, wherein the support element (110; 210) comprises at least two side walls (112, 113) lying opposite each other and extending at a right angle to the contact surface (111; 211), wherein the first slot (116; 216) is arranged in one (113) of the two side walls and the through hole (118; 218) in the other (112) of the two side walls.

6. Device (9; 109; 209) as claimed in any one of the foregoing claims, wherein a damping layer (140), such as a rubber layer, against which the ball (51; 151; 251) can lie is provided in the ball socket (131; 231).

7. Assembly comprising a device (9; 109; 209) as claimed in any one of the foregoing claims, and a cylinder (50; 150; 250) comprising a ball (51; 151; 251) of a ball joint, wherein the cylinder (50; 150; 250) and the support element (110; 210) are provided with mutually co-acting holding means whereby the cylinder (50; 150; 250) can be held with its ball (51; 151; 251) movably in the ball socket (131; 231).

8. Assembly as claimed in claim 7, , wherein the mutually co-acting holding means comprise a second bayonet connection.

9. Assembly as claimed in claim 8, wherein the second bayonet connection comprises a second slot (217) and a second protrusion (253), wherein in a connected state of the second bayonet connection the second protrusion (253) has a cross-sectional dimension which is smaller than an at least local cross-sectional dimension of the second slot (217), whereby the second protrusion (253) is movable in the second slot (217).

10. Assembly as claimed in claim 8 or 9, wherein the second bayonet connection comprises the or a second slot (217) in the support element (110; 210) and the or a second protrusion (253) on the cylinder (50; 150; 250) and/or the ball (51; 151; 251) thereof.

11. Assembly as claimed in any one of the claims 7-10, wherein the holding means comprise a second through hole (119; 219) in the support element (110; 210), through which a second fixing element (254) which can be connected to the cylinder (50; 150; 250) and/or ball (51; 151; 251) is inserted in order to connect the cylinder (50; 150; 250) and/or the ball (51; 151; 251) movably to the support element (110; 210), optionally wherein the second through hole (119; 219) in the support element (110; 210) has a cross-sectional dimension which is greater than an at least local cross-sectional dimension of the second fixing element (254), whereby the second fixing element (254) is movable in the second hole.

12. Assembly as claimed in claim 10 or 11, , comprising a device (9; 109; 209) as claimed in at least claim 5, wherein the second slot (217) is arranged in one (113) of the side walls and the second through hole (119; 219) in the other (112) of the side walls.

13. Vehicle comprising a chassis and a wheel axle and the assembly as claimed in any one of the claims 7-12, wherein the wheel axle is connected to the cylinder (50; 150; 250), which is held with its ball (51; 151; 251) in the ball socket (131; 231) of the device (9; 109; 209), and wherein the device (9; 109; 209) is attached to the chassis.

14. Method for attaching to a chassis of a vehicle a cylinder (50; 150; 250) comprising a ball (51; 151; 251) of a ball joint, comprising the steps of:
- mounting a support element (110; 210) on the chassis;
- releasably attaching to the support element (110; 210) a ball joint housing (130; 230) having a ball socket (131; 231); and
- attaching the cylinder (50; 150; 250) releasably to the chassis, such that the ball (51; 151; 251) of the ball joint rests in the ball socket (131; 231),
**characterized in that** the ball joint housing (130; 230) is attached releasably to the support element (110; 210) by means of a first bayonet connection.

15. Method as claimed in claim 14, wherein the cylinder (50; 150; 250) is attached to the chassis by attaching it releasably to the support element (110; 210) by means of a second bayonet connection.

## Patentansprüche

1. Vorrichtung (9; 109; 209) zum Befestigen eines Zylinders (50; 150; 250) mit einer Kugel (51; 151; 251) eines Kugelgelenks an einem Fahrgestell eines Fahrzeugs, aufweisend:
- ein Trägerelement (110; 210), welches am Fahrgestell montiert werden kann; und
- ein Kugelgelenkgehäuse (130; 230), welches eine Kugelpfanne (131; 231) des Kugelgelenks aufweist, an der die Kugel (51; 151; 251) anliegen kann, wobei das Kugelgelenkgehäuse (130; 230) an dem Trägerelement (110; 210) lösbar befestigt ist,
**dadurch gekennzeichnet, dass** das Kugelgelenkgehäuse (130; 230) mittels einer ersten Bajonettverbindung an dem Trägerelement (110; 210) lösbar befestigt ist.

2. Vorrichtung (9; 109; 209) nach Anspruch 1, wobei die erste Bajonettverbindung in dem Trägerelement (110; 210) einen ersten Schlitz (116; 216) und an dem Kugelgelenkgehäuse (130; 230) einen ersten Vorsprung (132; 232) aufweist, wobei der erste Vorsprung (132; 232) in dem ersten Schlitz (116; 216) beweglich aufgenommen ist.

3. Vorrichtung (9; 109; 209) nach Anspruch 1 oder 2, wobei das Trägerelement (110; 210) eine erste Durchgangsbohrung (118; 218) aufweist, in die ein erstes mit dem Kugelgelenkgehäuse (130; 230) verbundenes Befestigungselement (234) eingesetzt ist.

4. Vorrichtung (9; 109; 209) nach einem der vorherigen Ansprüche, wobei das Trägerelement (110; 210) eine Kontaktfläche (111; 211) aufweist, an der das Kugelgelenkgehäuse (130; 230) anliegt, wobei die Kontaktfläche (111; 211) und das Kugelgelenkgehäuse (130; 230) mit jeweils ersten und zweiten wechselseitig zusammenwirkenden Verriegelungsmitteln (133; 220, 233) versehen sind, zum Verriegeln des Kugelgelenkgehäuses (130; 230) gegen eine Verschiebung relativ zu dem Trägerelement (110; 210) in einer Ebene parallel zu der Kontaktfläche (111; 211).

5. Vorrichtung (9; 109; 209) nach Anspruch 3 oder 4 in Abhängigkeit von Anspruch 2, wobei das Trägerelement (110; 210) mindestens zwei einander gegenüberliegende und rechtwinklig zur Kontaktfläche (111; 211) verlaufende Seitenwände (112, 113) aufweist, wobei der erste Schlitz (116; 216) in einer (113) der beiden Seitenwände und das Durchgangsloch (118; 218) in der anderen (112) der beiden Seitenwände angeordnet ist.

6. Vorrichtung (9; 109; 209) nach einem der vorherigen Ansprüche, wobei in der Kugelpfanne (131; 231) eine Dämpfungseinlage (140), wie eine Gummieinlage, vorgesehen ist, an der die Kugel (51; 151; 251) anliegt.

7. Baugruppe mit einer Vorrichtung (9; 109; 209) nach einem der vorherigen Ansprüche und einem Zylinder (50; 150; 250) mit einer Kugel (51; 151; 251) eines Kugelgelenks, wobei der Zylinder (50; 150; 250) und das Trägerelement (110; 210) mit wechselseitig zusammenwirkenden Haltemitteln versehen sind, durch die der Zylinder (50; 150; 250) über seine Kugel (51; 151; 251) beweglich in der Kugelpfanne (131; 231) gehalten werden kann.

8. Baugruppe nach Anspruch 7, wobei die wechselseitig zusammenwirkenden Haltemittel eine zweite Bajonettverbindung darstellen.

9. Baugruppe nach Anspruch 8, wobei die zweite Bajonettverbindung einen zweiten Schlitz (217) und einen zweiten Vorsprung (253) aufweist, wobei in einem verbundenen Zustand der zweiten Bajonettverbindung der zweite Vorsprung (253) eine Querschnittsabmessung aufweist, die kleiner ist als eine zumindest lokale Querschnittsabmessung des zweiten Schlitzes (217), wodurch der zweite Vorsprung (253) in dem zweiten Schlitz (217) beweglich ist.

10. Baugruppe nach Anspruch 8 oder 9, wobei die zweite Bajonettverbindung den oder einen zweiten Schlitz (217) in dem Trägerelement (110; 210) und den oder einen zweiten Vorsprung (253) an dem Zylinder (50; 150; 250) und/oder dessen Kugel (51; 151; 251) umfasst.

11. Baugruppe nach einem der Ansprüche 7 bis 10, wobei die Haltemittel im Trägerelement (110; 210) eine zweite Durchgangsbohrung (119; 219) aufweisen, in die ein zweites Befestigungselement (254), das mit dem Zylinder (50; 150; 250) und/oder der Kugel (51; 151; 251) verbunden werden kann, eingeführt wird, um den Zylinder (50; 150; 250) und/oder die Kugel (51; 151; 251) mit dem Trägerelement (110; 210) beweglich zu verbinden, wobei optional das zweite Durchgangsloch (119; 219) in dem Trägerelement (110; 210) eine Querschnittsabmessung aufweist, die größer ist als eine zumindest lokale Querschnittsabmessung des zweiten Befestigungselements (254), wodurch das zweite Befestigungselement (254) in dem zweiten Loch beweglich ist.

12. Baugruppe nach Anspruch 10 oder 11, aufweisend eine Vorrichtung (9; 109; 209) nach zumindest Anspruch 5, wobei der zweite Schlitz (217) in einer (113) der Seitenwände und das zweite Durchgangsloch (119; 219) in der anderen (112) der Seitenwände angeordnet ist.

13. Fahrzeug mit einem Fahrgestell und einer Radachse und der Baugruppe nach einem der Ansprüche 7 bis 12, wobei die Radachse mit dem Zylinder (50; 150; 250) verbunden ist, welcher mit seiner Kugel (51; 151; 251) in der Kugelpfanne (131; 231) der Vorrichtung (9; 109; 209) gehalten wird, und wobei die Vorrichtung (9; 109; 209) am Fahrgestell befestigt ist.

14. Verfahren zur Befestigung eines Zylinders (50; 150; 250) mit einer Kugel (51; 151; 251) eines Kugelgelenks an einem Fahrgestell eines Fahrzeugs, aufweisend die folgenden Schritte:
- Anbringen eines Trägerelements (110; 210) am Fahrgestell;
- lösbares Befestigen eines Kugelgelenkgehäuses (130; 230) mit einer Kugelpfanne (131; 231) an dem Trägerelement (110; 210); und
- lösbares Befestigen des Zylinders (50; 150; 250) an dem Fahrgestell, so dass die Kugel (51; 151; 251) des Kugelgelenks in der Kugelpfanne (131; 231) ruht,
**dadurch gekennzeichnet, dass** das Kugelgelenkgehäuse (130; 230) an dem Trägerelement (110; 210) mittels einer ersten Bajonettverbindung lösbar befestigt wird.

15. Verfahren nach Anspruch 14,
wobei der Zylinder (50; 150; 250) an dem Fahrgestell befestigt wird, indem er an dem Trägerelement (110; 210) mittels einer zweiten Bajonettverbindung lösbar befestigt wird.

## Revendications

1. Dispositif (9 ; 109 ; 209) destiné à fixer sur un châssis d'un véhicule un vérin (50 ; 150 ; 250) comprenant une rotule (51 ; 151 ; 251) d'un joint à rotule, comprenant :
un élément de support (110 ; 210) qui peut être monté sur le châssis ; et
un logement de joint à rotule (130 ; 230), qui comprend une cavité sphérique (131 ; 231) du joint à rotule contre laquelle la rotule (51 ; 151 ; 251) peut reposer, dans lequel le logement de joint à rotule (130 ; 230) est fixé de manière amovible sur l'élément de support (110 ; 210),
**caractérisé en ce que** le logement de joint à rotule (130 ; 230) est fixé de manière amovible sur l'élément de support (110 ; 210) au moyen d'une première liaison à baïonnette.

2. Dispositif (9 ; 109 ; 209) selon la revendication 1, dans lequel la première liaison à baïonnette comprend une première fente (116 ; 216) sur l'élément de support (110 ; 210) et une première saillie (132 ; 232) sur le logement de joint à rotule (130 ; 230), laquelle première saillie (132 ; 232) est reçue de manière à pouvoir se déplacer dans la première fente (116 ; 216).

3. Dispositif (9 ; 109 ; 209) selon la revendication 1 ou 2, dans lequel :
l'élément de support (110 ; 210) comporte un premier orifice traversant (118 ; 218), à travers lequel est inséré un premier élément de fixation (234), qui est relié au logement de joint à rotule (130 ; 230).

4. Dispositif (9 ; 109 ; 209) selon l'une quelconque des revendications précédentes, dans lequel l'élément de support (110 ; 210) comporte une surface de contact (111 ; 211) contre laquelle le logement de joint à rotule (130 ; 230) est situé, dans lequel la surface de contact (111 ; 211) et le logement de joint à rotule (130 ; 230) comportent des premier et second moyens de verrouillage coopérants (133 ; 220, 233) respectifs afin de verrouiller le déplacement du logement de joint à rotule (130 ; 230) par rapport à l'élément de support (110 ; 210) dans un plan parallèle à la surface de contact (111 ; 211).

5. Dispositif (9 ; 109 ; 209) selon la revendication 3 ou 4 lorsqu'elle dépend de la revendication 2, dans lequel l'élément de support (110 ; 210) comprend au moins deux parois latérales (112, 113) agencées à l'opposé l'une de l'autre et s'étendant suivant un angle droit vers la surface de contact (111 ; 211), dans lequel la première fente (116 ; 216) est agencée sur une première (113) des deux parois latérales et l'orifice traversant (118 ; 218) sur l'autre (112) des deux parois latérales.

6. Dispositif (9 ; 109 ; 209) selon l'une quelconque des revendications précédentes, dans lequel une couche d'amortissement (140), telle qu'une couche de caoutchouc, contre laquelle la rotule (51 ; 151 ; 251) peut reposer est formée sur la cavité sphérique (131 ; 231).

7. Ensemble comprenant un dispositif (9 ; 109 ; 209) selon l'une quelconque des revendications précédentes et un vérin (50 ; 150 ; 250) comprenant une rotule (51 ; 151 ; 251) d'un joint à rotule, dans lequel le vérin (50 ; 150 ; 250) et l'élément de support (110 ; 210) comportent des moyens de retenue coopérants de telle sorte que le vérin (50 ; 150 ; 250) peut être maintenu avec sa rotule (51 ; 151 ; 251) de manière à pouvoir se déplacer dans la cavité sphérique (131 ; 231).

8. Ensemble selon la revendication 7, dans lequel les moyens de retenue coopérants comprennent une seconde liaison à baïonnette.

9. Ensemble selon la revendication 8,
dans lequel la seconde liaison à baïonnette comprend une seconde fente (217) et une seconde saillie (253), dans lequel, dans un état couplé de la seconde liaison à baïonnette, la seconde saillie (253) présente une dimension en section transversale qui est inférieure à une dimension en section transversale au moins locale de la seconde fente (217), de telle sorte que la seconde saillie (253) peut être déplacée dans la seconde fente (217).

10. Ensemble selon la revendication 8 ou 9, dans lequel la seconde liaison à baïonnette comprend la ou une seconde fente (217) sur l'élément de support (110 ; 210) et la ou une seconde saillie (253) sur le vérin (50 ; 150 ; 250) et/ou la rotule (51 ; 151 ; 251) de celle-ci.

11. Ensemble selon l'une quelconque des revendications 7 à 10, dans lequel les moyens de retenue comprennent un second orifice traversant (119 ; 219) sur l'élément de support (110 ; 210), à travers lequel un second élément de fixation (254) qui peut être relié au vérin (50 ; 150 ; 250) et/ou à la rotule (51 ; 151 ; 251) est inséré dans le but de relier le vérin (50 ; 150 ; 250) et/ou la rotule (51 ; 151 ;251) de manière pouvoir se déplacer par rapport à l'élément de support (110 ; 210), dans lequel, en variante, le second orifice traversant (119 ; 219) sur l'élément de support (110 ; 210) présente une dimension en section transversale qui est supérieure à une dimension en section transversale au moins locale du second élément de fixation (254), de telle sorte que le second élément de fixation (254) peut être déplacé dans le second orifice.

12. Ensemble selon la revendication 10 ou 11, comprenant un dispositif (9 ; 109 ; 209) selon au moins la revendication 5, dans lequel la seconde fente (217) est agencée sur une première (113) des parois latérales et le second orifice traversant (119 ; 219) sur l'autre (112) des parois latérales.

13. Véhicule comprenant un châssis et un essieu de roue et l'ensemble selon l'une quelconque des revendications 7 à 12,
dans lequel l'essieu de roue est relié au vérin (50 ; 150 ; 250), qui est maintenu avec sa rotule (51 ; 151 ; 251) sur la cavité sphérique (131 ; 231) du dispositif (9 ; 109 ; 209), et dans lequel le dispositif (9 ; 109 ; 209) est fixé sur le châssis.

14. Procédé de fixation sur un châssis d'un véhicule, d'un vérin (50 ; 150 ; 250) comprenant une rotule (51 ; 151 ; 251) d'un joint à rotule, comprenant les étapes de :
montage d'un élément de support (110 ; 210) sur le châssis ;
fixation de manière amovible sur l'élément de support (110 ; 210) d'un logement de joint à rotule (130 ; 230) comportant une cavité sphérique (131 ; 231) ; et
fixation du vérin (50 ; 150 ; 250) de manière amovible sur le châssis, de telle sorte que la rotule (51 ; 151 ; 251) du joint à rotule repose sur la cavité sphérique (131 ; 231),
**caractérisé en ce que** le logement de joint à rotule (130 ; 230) est fixé de manière amovible sur l'élément de support (110 ; 210) au moyen d'une première liaison à baïonnette.

15. Procédé selon la revendication 14, dans lequel le vérin (50 ; 150 ; 250) est fixé sur le châssis en le fixant de manière amovible sur l'élément de support (110 ; 210) au moyen d'une seconde liaison à baïonnette.
